# EUROPEAN PATENT SPECIFICATION

(11) **EP 3 786 326 B1**
(45) Date of publication and mention of the grant of the patent: **27.04.2022**
(21) Application number: 19793534.9
(22) Date of filing: 05.04.2019
(51) Int. Cl.: D03D 3/08, B29B 11/16, B29C 70/24, D03D 11/00

(54) **FIBER STRUCTURE, FIBER-REINFORCED COMPOSITE MATERIAL, AND METHOD OF MANUFACTURING FIBER STRUCTURE**
FASERSTRUKTUR, FASERVERSTÄRKTER VERBUNDSTOFF UND VERFAHREN ZUR HERSTELLUNG EINER FASERSTRUKTUR
STRUCTURE DE FIBRES, MATÉRIAU COMPOSITE RENFORCÉ DE FIBRES, ET PROCÉDÉ DE FABRICATION DE STRUCTURE DE FIBRES

(30) Priority: 27.04.2018 JP 2018086478
(43) Date of publication of application: 03.03.2021
(73) Proprietor: Kabushiki Kaisha Toyota Jidoshokki, Kariya-shi, Aichi 448-8671 (JP)
(72) Inventor: KAMIYA Ryuta, Kariya-shi, Aichi 448-8671 (JP)
(74) Representative: TBK
(86) International application number: PCT/JP2019/015205
(87) International publication number: WO 2019/208176

(56) References cited:
- WO-A1-02/055773
- JP-A- H01 111 038
- JP-A- H01 314 750
- JP-A- H03 504 401
- JP-A- S62 117 843
- JP-A- 2015 501 890

## Description

The present invention relates to a fiber structure body including a branch portion, a fiber-reinforced composite material, and a method of producing the fiber structure body.

### BACKGROUND ART

Fiber-reinforced composite materials are used as lightweight materials of high strength. The fiber-reinforced composite materials are formed by combining a reinforced fiber (a reinforced base material) into a matrix of resin, ceramics, or others. This enhances the dynamic characteristics (mechanical characteristics) of the fiber-reinforced composite materials in comparison with that of the matrix itself. Therefore, the fiber-reinforced composite materials are desirable to be used as structural components.

Some of the fiber-reinforced composite materials have curved shapes such as a circular-arc shape and an annular-ring shape in a plan view. Such fiber-reinforced composite materials are provided with fiber structure bodies that form reinforced base materials. Examples of the fiber structure bodies include a three-dimensional fiber structure body disclosed in Patent Document 1. The three-dimensional fiber structure body of Patent Document 1 includes a fan-shaped plate-like portion in which a stacked-layer yarn group is bound by thickness-direction yarns. The stacked-layer yarn group is biaxially oriented at least with a yarn layer of 0-degree arrangement yarns arranged along a circular arc of the fan-shaped plate-like portion and a yarn layer of 90-degree arrangement yarns. The three-dimensional fiber structure body is formed so that a plurality of the three-dimensional fiber structure bodies may be formed into an annular ring when ends of the fan-shaped plate-like portions of the three-dimensional fiber structure bodies in a longitudinal direction are connected to one another.

Alternatively, some of the fiber-reinforced composite materials have an annular-ring shape in the plan view. Such a fiber-reinforced composite material having the annular-ring shape may be produced by connecting the fiber structure bodies to one another. The fiber structure bodies form the reinforced base materials of the fiber-reinforced composite material. Each of the fiber structure bodies having the fan-shaped plate like Patent Document 1 has branch portions at ends thereof in the longitudinal direction. Each of the branch portions of the fiber structure body is formed by branching a stacked-layer yarn group into two yarn groups. The annular-ring shaped fiber-reinforced composite material is produced by connecting the branch portions at the ends of any two of the fiber structure bodies adjacent to each other in a circumferential direction with a connection member interposed between the branch portions to be connected. In each of the branch portions of the fiber structure bodies, each of the two yarn groups branched out from the stacked-layer yarn group is bound by thickness-direction yarns, whereas all the yarn groups are bound by the thickness-direction yarns in other portions of the stacked-layer yarn group than the branch portion.

Patent Document 2 and 3 disclose a non curved multilayer fiber structure having a branch portion.

### Citation List

### Patent Document

Patent Document 1: Japanese Patent Application Publication No. 2005-97759
Patent Document 2 : JP H01 314750 A
Patent Document 3 : JP S62 117843 A

### SUMMARY OF INVENTION

### Technical Problem

Unfortunately, when the stacked-layer yarn group of the fiber structure body is branched into the two yarn groups, a bonding force (a binding force) of the thickness-direction yarns is comparatively weak in a region from a branching boundary line located at a root of the two yarn groups to a closest 90-degree arrangement yarn closest to the branching boundary line among the 90-degree arrangement yarns in the stacked-layer yarn group. Since the 90-degree arrangement yarns are arranged in a circumferential direction of the circular arc in which the 0-degree arrangement yarns extend, a distance from the branching boundary line to each of the closest 90-degree arrangement yarns closest to the branching boundary line is not uniform. As a result, the farther the distance from the branching boundary line to the closest 90-degree arrangement yarn is, the weaker the binding force of the thickness-direction yarn is, which easily causes layer separation in the stacked-layer yarn group.

It is an objective of the present invention to provide a fiber structure body and a fiber-reinforced composite material that are capable of restraining layer separation in a branch portion of the fiber structure body, and a method of producing the fiber structure body.

### Solution to Problem

To achieve the foregoing objective and in accordance with one aspect of the present invention, there is provided a fiber structure body that is a multi-layered fabric. The multi-layered fabric includes a plurality of first yarn layers each including a plurality of first yarns, and a plurality of second yarn layers each including a plurality of second yarns that intersects with the first yarns. The first yarn layers and the second yarn layers are stacked on top of each other and bound by a plurality of binder yarns in a stacking direction in which the first yarn layers and the second yarn layers are stacked. The fiber structure body includes a main body and a branch portion. In the main body, all of yarn layers of the first yarn layers and the second yarn layers of the multi-layered fabric are bound by the binder yarns. The branch portion is continuous with the main body at least at one end of the main body in a yarn main-axis direction of the first yarns, and includes a first formation and a second formation that are branched out from the yarn layers of the multi-layered fabric. The first formation is disposed at one end of the multi-layered fabric in the stacking direction and the second formation is disposed at the other end of the multi-layered fabric in the stacking direction. The fiber structure body includes an inner periphery curved in a plan view and an outer periphery curved in the plan view outside the inner periphery. The yarn main-axis direction of the first yarns extends in a circumferential direction and a yarn main-axis direction of the second yarns extends in a radial direction, where the radial direction refers to a direction in which a shortest line connecting the inner periphery and the outer periphery of the fiber structure body extends and the circumferential direction refers to a direction in which the inner periphery and the outer periphery of the fiber structure body extend. A main axis of each of closest second yarns closest to a branching boundary line among the second yarns of the main body is parallel to the branching boundary line in the branch portion. The branching boundary line extends along a location from which the first formation and the second formation of the branch portion start branching out.

In the fiber structure body that includes the main body and the branch portion, a binding force of the main body in the stacking direction is comparatively weak in a region from a location from which the first formation and the second formation start branching out, i.e., a location of the branching boundary line, to each of the closest second yarns of the main body closest to the branching boundary line. However, paralleling each of the closest second yarns by the branching boundary line allows a distance from each of the closest second yarns to the branching boundary line to be uniform in the radial direction of the fiber structure body, variations in the binding forces of the main body in the stacking direction to be eliminated, and thereby the layer separation in the branch portion to be restrained.

To achieve the foregoing objective and in accordance with another aspect of the present invention, there is provided a fiber-reinforced composite material including the fiber structure body according to claim 1 as a reinforced base material that is combined into a matrix.

In the fiber structure body that includes the main body and the branch portion, a binding force of the main body in the stacking direction is comparatively weak in a region from a location from which the first formation and the second formation start branching out, i.e., a location of the branching boundary line, to each of the closest second yarns of the main body closest to the branching boundary line. However, paralleling each of the closest second yarns by the branching boundary line allows the distance from each of the closest second yarns to the branching boundary line to be uniform in the radial direction of the fiber structure body, variations in the binding forces of the main body in the stacking direction to be eliminated, and thereby the layer separation in the branch portion to be restrained.

To achieve the foregoing objective and in accordance with still another aspect of the present invention, there is provided a method of producing a fiber structure body that is a multi-layered fabric. The multi-layered fabric includes a plurality of first yarn layers each including a plurality of first yarns, and a plurality of second yarn layers each including a plurality of second yarns that intersects with the first yarns. The first yarn layers and the second yarn layers are stacked on top of each other and bound by a plurality of binder yarns in a stacking direction in which the first yarn layers and the second yarn layers are stacked. The fiber structure body includes a main body and a branch body. In the main body, all of yarn layers of the first yarn layers and the second yarn layers of the multi-layered fabric are bound by the binder yarns. The branch portion is continuous with the main body at least at one end of the main body in a yarn main-axis direction of the first yarns, and includes a first formation and a second formation that are branched out from the yarn layers of the multi-layered fabric. The first formation is disposed at one end of the multi-layered fabric in the stacking direction and the second formation is disposed at the other end of the multi-layered fabric in the stacking direction. The method of producing the fiber structure body includes producing a preform body and cutting the preform body. The preform body includes an inner periphery curved in a plan view and an outer periphery curved in the plan view outside the inner periphery. A main axis of the first yarns extends in a circumferential direction in which the inner periphery and the outer periphery of the preform body extend. A main axis of the second yarns extends in a radial direction in which a shortest line connecting the inner periphery and the outer periphery of the preform body extends. The preform body includes the branch portion at least one end of the preform body in the circumferential direction. The preform body is cut such that a main axis of each of closest second yarns closest to a branching boundary line among the second yarns of the main body becomes parallel to the branching boundary line in the branch portion to form the branch portion and the main body. The branching boundary line extends along a location from which the first formation and the second formation of the branch portion start branching out.

In the fiber structure body that includes the main body and the branch portion, a binding force of the main body in the stacking direction is comparatively weak in a region from a location from which the first formation and the second formation start branching out, i.e., a location of the branching boundary line, to each of the closest second yarns of the main body closest to the branching boundary line. However, paralleling each of the closest second yarns by the branching boundary line allows the distance from each of the closest second yarns to the branching boundary line to be uniform in the radial direction of the fiber structure body, variations in the binding forces of the main body in the stacking direction to be eliminated, and thereby the layer separation in the branch portion to be restrained.

To achieve the foregoing objective and in accordance with yet another aspect of the present invention, there is provided a method of producing a fiber structure body that is a multi-layered fabric. The multi-layered fabric includes a plurality of first yarn layers each including a plurality of first yarns, and a plurality of second yarn layers each including a plurality of second yarns that intersects with the first yarns. The first yarn layers and the second yarn layers are stacked on top of each other and bound by a plurality of binder yarns in a stacking direction in which the first yarn layers and the second yarn layers are stacked. The fiber structure body includes a main body and a branch body. In the main body, all of yarn layers of the first yarn layers and the second yarn layers of the multi-layered fabric are bound by the binder yarns. The branch portion is continuous with the main body at least at one end of the main body in a yarn main-axis direction of the first yarns, and includes a first formation and a second formation that are branched out from the yarn layers of the multi-layered fabric. The first formation is disposed at one end of the multi-layered fabric in the stacking direction and the second formation is disposed at the other end of the multi-layered fabric in the stacking direction. The method of producing the fiber structure body includes fixing first ends of the first yarns in the yarn main-axis direction of the first yarns to a first take-up member, inserting the second yarns orthogonally to the first yarns while the first take-up member linearly takes up the first yarns to form the first yarn layers and the second yarn layers, binding the first yarn layers and the second yarn layers by the binder yarns in the stacking direction to form the first formation and the second formation, fixing the first formation and the second formation to a second take-up member after forming the first formation and the second formation, and inserting the second yarns such that a main axis of each of closest second yarns closest to a branching boundary line among the second yarns of the main body becomes parallel to the branching boundary line in the branch portion while the second take-up member takes up the first yarns so that a main axis of the first yarns is curved in a plan view, the branching boundary line extending along a location from which the first formation and the second formation of the branch portion start branching out.

In the fiber structure body that includes the main body and the branch portion, a binding force of the main body in the stacking direction is comparatively weak in a region from a location from which the first formation and the second formation start branching out, i.e., a location of the branching boundary line, to each of the closest second yarns of the main body closest to the branching boundary line. However, paralleling each of the closest second yarns by the branching boundary line allows the distance from each of the closest second yarns to the branching boundary line to be uniform in the radial direction of the fiber structure body, variations in the binding forces of the main body in the stacking direction to be eliminated, and thereby the layer separation in the branch portion to be restrained. Such a fiber structure body is produced by using a loom.

### Advantageous Effects of Invention

According to the present invention, layer separation in a branch portion of a fiber structure body is restrained.

### BRIEF DESCRIPTION OF DRAWINGS

FIG. 1 is a plan view showing a fiber-reinforced composite material according to an embodiment of the present invention.
FIG. 2 is a perspective view schematically showing a fiber structure body according to the embodiment of the present invention.
FIG. 3A is a side view partially showing a branch portion and a main body of the fiber structure body.
FIG. 3B is a diagram schematically showing a fiber structure of the branch portion and the main body of the fiber structure body.
FIG. 4 is a plan view showing the fiber structure body.
FIG. 5 is a diagram explaining a process of producing the fiber structure body.
FIG. 6 is a diagram schematically showing a cutting process.
FIGS. 7A to 7C diagrams explaining a method of producing the fiber structure body according to another example of the embodiment.

### DESCRIPTION OF EMBODIMENT

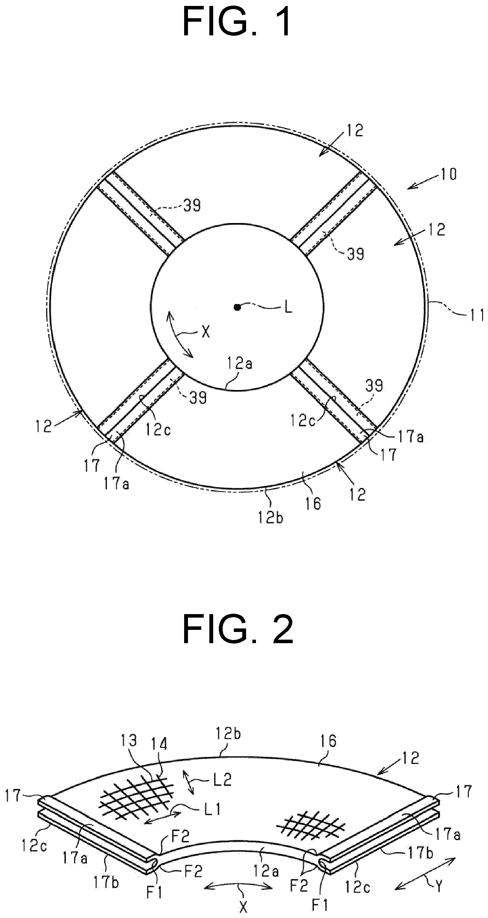

A fiber structure body, a fiber-reinforced composite material, and a method of producing the fiber structure body according to an embodiment of the present invention will now be described with reference to FIGS. 1 to 6.

Referring to FIG. 1, a fiber-reinforced composite material 10 is formed by combining a plurality of fiber structure bodies 12 as reinforced base materials into a matrix 11. In this embodiment, resin is used as the matrix 11. Metal or ceramics may be used as the matrix 11 instead of the resin.

The fiber-reinforced composite material 10 has an annular-ring plate-like shape in a plan view. The plan view here refers to externally viewing the fiber-reinforced composite material 10 in a direction along a center axis L of the fiber-reinforced composite material 10. The direction in which the center axis L extends in the fiber-reinforced composite material 10 is referred to as a thickness direction.

A fiber structure body 12 will now be described.

Referring to FIG. 2, each of the fiber structure bodies 12 forming the fiber-reinforced composite materials 10 has a fan shape in the plan view. The fiber structure body 12 includes a main body 16 and branch portions 17. The main body 16 has the fan shape in the plan view and extends along a circular arc of the fan shape. The branch portions 17 having rectangular shapes in the plan view are continuous with the main body 16 at both ends thereof in a direction of the circular arc of the fan shape extending.

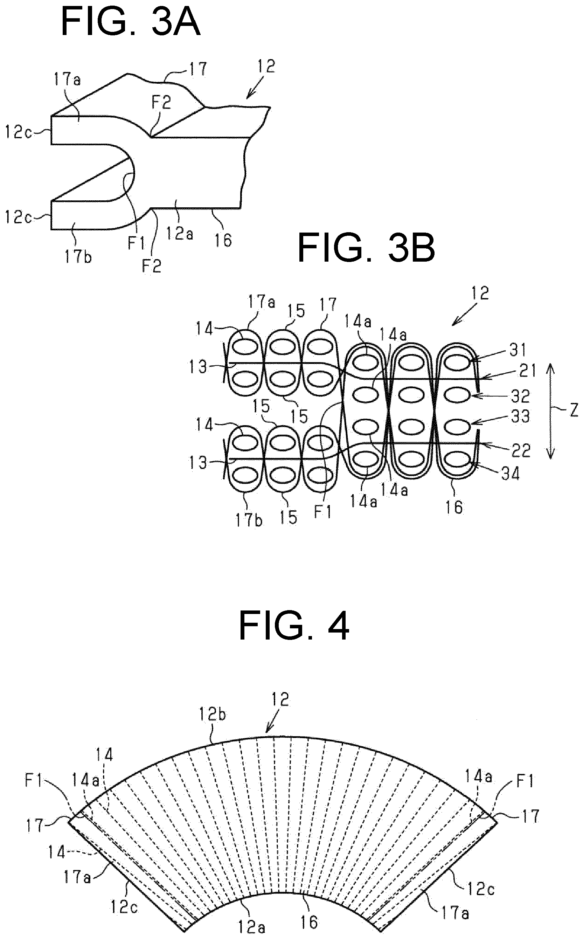

Referring to FIGS. 3Aand 3B, each of the branch portions 17 has a shape of two branches branching out in a thickness direction of the fiber structure body 12 from each of the both ends of the fiber structure body 12 in the direction in which the circular arc extends. Each of the branch portions 17 has a first formation 17a and a second formation 17b. The first formation 17a is disposed at one end of the fiber structure body 12 in the thickness direction. The second formation 17b is disposed at the other end of the fiber structure body 12 in the thickness direction. The fiber structure body 12 has a branching boundary line F1 at a location where a surface of the first formation 17a facing the second formation 17b meets to join with a surface of the second formation 17b facing the first formation 17a. The first formation 17a and the second formation 17b form the two branches that start branching out from the branching boundary line F1. The fiber structure body 12 has ridge base lines F2 along which the first formation 17a and the second formation 17b are bent from outer surfaces of the main body 16. The first formation 17a and the second formation 17b are bent from the main body 16 along the respective ridge base lines F2.

As shown in FIG. 2, the fiber structure body 12 includes an inner periphery 12a, an outer periphery 12b, and edges 12c. The inner periphery 12a extends along the circular arc to form a curved shape in the plan view. The outer periphery 12b is disposed outside the inner periphery 12a and extends along the circular arc to form a curved shape in the plan view. Each of the edges 12c connects an end of the inner periphery 12a to an end of the outer periphery 12b.

Each of the inner peripheries of the main body 16 and the branch portions 17 forms a part of the inner periphery 12a of the fiber structure body 12, and each of the outer peripheries of the main body 16 and the branch portions 17 forms a part of the outer periphery 12b of the fiber structure body 12. In each of the branch portions 17, an edge of the first formation 17a and an edge of the second formation 17b form the edges 12c. The first formation 17a and the second formation 17b of each of the branch portions 17 are disposed at each of the both ends of the fiber structure body 12 in the direction in which the circular arc of the fiber structure body 12 extends.

In the fiber structure body 12 having a fan-shaped plate-like shape in the plan view, an arc length of the inner periphery 12a is shorter than an arc length of the outer periphery 12b. In the fiber structure body 12, a direction in which the inner periphery 12a and the outer periphery 12b extend is referred to as a circumferential direction X, and a direction in which a straight shortest line connecting the inner periphery 12a and the outer periphery 12b extends is referred to as a radial direction Y. The outer periphery 12b is disposed outside (on an outer diameter side) the inner periphery 12a in the radial direction Y. The branch portions 17 are continuous with the both ends of the main body 16 that extends along the circumferential direction X. In each of the branch portions 17, the branching boundary line F1 and the ridge base lines F2 extend in the radial direction Y, parallel to the corresponding edges 12c of the fiber structure body 12. This thereby allows distances from the edges 12c of each of the branch portions 17 to the associated branching boundary line F1 in the circumferential direction X to be uniform along the radial direction Y.

The fiber structure body 12 is a multi-layered fabric. The fiber structure body 12 is a fabric that includes a plurality of warp yarns 13 as a plurality of first yarns and a plurality of weft yarns 14 as a plurality of second yarns. The warp yarns 13 are arranged parallel to each other such that a yarn main-axis direction L1 thereof extends along the circular arc. The weft yarns 14 are arranged such that a yarn main-axis direction L2 thereof extends in a direction intersecting with the warp yarns 13. The yarn main-axis direction L1 of the warp yarns 13 extends in the circumferential direction X of the fiber structure body 12, and the yarn main-axis direction L2 of the weft yarns 14 extends in the radial direction Y of the fiber structure body 12. The branch portions 17 of the fiber structure body 12 are continuous with the main body 16 at the both ends of the main body 16 in the circumferential direction X, i.e., the yarn main-axis direction L1 of the warp yarns 13.

Intervals of the weft yarns 14 adjacent to each other in the circumferential direction X increase gradually toward the outer periphery 12b along the radial direction Y in the plan view of the fiber structure body 12. Intervals of the warp yarns 13 adjacent to each other in the radial direction Y remain the same in the plan view of the fiber structure body 12, although they are not shown.

The warp yarns 13 and the weft yarns 14 are fiber bundles formed by binding reinforced fibers. Various types of fibers may be used for the reinforced fiber, such as organic fiber, inorganic fiber, organic fibers of different types, inorganic fibers of different types, and mixed fibers of the organic fibers and the inorganic fibers. The types of the organic fibers include aramid fiber, poly-p-phenylene benzobisoxazole fiber, ultra-high molecular weight polyethylene fiber, and so forth. The types of the inorganic fibers include carbon fiber, glass fiber, ceramic fiber, and so forth.

As shown in FIG. 3B, the fiber structure body 12 is formed by stacking a plurality of yarn layers on top of each other. A direction in which the yarn layers are stacked on top of each other is referred to as a stacking direction Z of the fiber structure body 12. The stacking direction Z coincides with the thickness direction of the fiber-reinforced composite material 10. In FIG. 3B, the warp yarns 13 and the weft yarns 14 are illustrated as if the warp yarns 13 adjacent to each other were apart from each other and the weft yarns 14 adjacent to each other were apart from each other, for the sake of better understanding of the positional relationship between the warp yarns 13 and the weft yarns 14. However, the ends of the actual warp yarns 13 adjacent to each other are arranged to be in contact with each other by stacking and the ends of the actual weft yarns 14 adjacent to each other are arranged to be in contact with each other by stacking.

The main body 16 of the fiber structure body 12 includes a plurality of warp layers that is formed by arranging the plurality of warp yarns 13. The warp layers include a first warp layer 21 and a second warp layer 22 that is disposed below the first warp layer 21 in the stacking direction Z of the fiber structure body 12. The first warp layer 21 and the second warp layer 22 form first yarn layers.

The main body 16 of the fiber structure body 12 includes a plurality of weft layers that is formed by arranging the plurality of the weft yarns 14. The weft layers include a first weft layer 31, a second weft layer 32 that is disposed below the first weft layer 31 in the stacking direction Z of the fiber structure body 12, a third weft layer 33 that is disposed below the second weft layer 32 in the stacking direction Z, and a fourth weft layer 34 that is disposed below the third weft layer 33 in the stacking direction Z. The first weft layer 31, the second weft layer 32, the third weft layer 33, and the fourth weft layer 34 form second yarn layers.

In the main body 16 of the fiber structure body 12, the first weft layer 31, the first warp layer 21, the second weft layer 32, the third weft layer 33, the second warp layer 22, and the fourth weft layer 34 are stacked on top of each other in this order from one end to the other end (from top to bottom) in the stacking direction Z of the fiber structure body 12. The first weft layer 31, the first warp layer 21, the second weft layer 32, the third weft layer 33, the second warp layer 22, and the fourth weft layer 34, which are all the yarn layers in the main body 16, are bound by a plurality of binder yarns 15 in the stacking direction Z.

The plurality of binder yarns 15 is arranged in the radial direction Y. Each of the plurality of binder yarns 15 is the fiber bundle of the reinforced fiber, and is used for maintaining the shape of the fiber structure body 12. Various types of fibers may be used for the reinforced fiber, such as organic fiber, inorganic fiber, organic fibers of different types, inorganic fibers of different types, and mixed fibers of the organic fibers and the inorganic fibers. The plurality of binder yarns 15 is arranged substantially parallel to each of the warp yarns 13, and arranged to proceed along an outer surface of the weft yarn 14 in the first weft layer 31, i.e., a top layer of the main body 16 of the fiber structure body 12. Then, each of the binder yarns 15 is arranged to proceed through the main body 16 in the stacking direction Z of the fiber structure body 12, and to proceed along an outer surface of the weft yarn 14 in the fourth weft layer 34, i.e., a bottom layer of the main body 16 of the fiber structure body 12. Therefore, the binder yarns 15 engage with the weft yarns 14 in the first weft layer 31 and the weft yarns 14 in the fourth weft layer 34 at both ends of the fiber structure body 12 in the stacking direction Z.

The locations of the weft yarns 14 in the first weft layer 31 or the fourth weft layer 34 along which the binder yarns 15 adjacent to each other in the radial direction Y proceed are different in the circumferential direction X. By the binder yarns 15 engaging with each of the weft yarns 14, the first weft layer 31 to the fourth weft layer 34 are bound in the stacking direction Z, the first warp layer 21 is restrained between the first weft layer 31 and the second weft layer 32 adjacent to each other in the stacking direction Z, and the second warp layer 22 is restrained between the third weft layer 33 and the fourth weft layer 34 adjacent to each other in the stacking direction Z.

In each of the branch portions 17, the first weft layer 31, the first warp layer 21, and the second weft layer 32 are bound by the binder yarns 15 in the stacking direction Z in the first formation 17a. The binder yarns 15 engage with the weft yarns 14 in the first weft layer 31 and the weft yarns 14 in the second weft layer 32 at both ends of the first formation 17a in the stacking direction Z. The third weft layer 33, the second warp layer 22, and the fourth weft layer 34 are bound by the binder yarns 15 in the stacking direction Z in the second formation 17b. The binder yarns 15 engage with the weft yarns 14 in the third weft layer 33 and the weft yarns 14 in the fourth weft layer 34 at both ends of the second formation 17b in the stacking direction Z. The first formation 17a and the second formation 17b are not bound by the binder yarns 15 in the stacking direction Z.

In each of the branch portions 17, therefore, the first formation 17a is disposed at one end in the stacking direction Z of the multi-layered fabric, and the second formation 17b is disposed at the other end in the stacking direction Z of the multi-layered fabric.

Referring to FIG. 4, the weft yarns 14 that are closest, among the weft yarns 14, to the branching boundary line F1 of each of the branch portions 17 in the circumferential direction X are referred to as closest weft yarns 14a, in the fiber structure body 12 having the above-described configuration. In this embodiment, as shown in FIG. 3B, the closest weft yarns 14a refer to all of the weft yarns 14 in the stacking direction Z adjacent to the branching boundary line F1 in the circumferential direction X in each of the branch portions 17. In other words, the closest weft yarns 14a are in the first weft layer 31, the second weft layer 32, the third weft layer 33, and the fourth weft layer 34. Main axes of all the closest weft yarns 14a in each of the branch portions 17 are parallel to the branching boundary line F1. The distance between each of the closest weft yarns 14a and the branching boundary line F1 in the circumferential direction X is uniform along the radial direction Y. The binder yarns 15 intersect with each other at a location from which the first formation 17a and the second formation 17b start branching out. The binder yarns 15 engage with the closest weft yarns 14a in the first weft layer 31 and in the fourth weft layer 34, among the closest weft yarns 14a adjacent to the above-described intersecting location of the binder yarns 15 in the circumferential direction X, so as to bind the main body 16 in the stacking direction Z.

Among the binder yarns 15 binding the first formation 17a, the binder yarn 15 engaging with the weft yarn 14 in the second weft layer 32 adjacent to the closest weft yarn 14a in the second weft layer 32 engages with the closest weft yarn 14a in the first weft layer 31, and the binder yarn 15 engaging with the weft yarn 14 in the first weft layer 31 adjacent to the closest weft yarn 14a in the first weft layer 31 engages with the closest weft yarn 14a in the fourth weft layer 34. Among the binder yarns 15 binding the second formation 17b, the binder yarn 15 engaging with the weft yarn 14 in the fourth weft layer 34 adjacent to the closest weft yarn 14a in the fourth weft layer 34 engages with the closest weft yarn 14a in the first weft layer 31, and the binder yarn 15 engaging with the weft yarn 14 in the third weft layer 33 adjacent to the closest weft yarn 14a in the third weft layer 33 engages with the closest weft yarn 14a in the fourth weft layer 34.

Therefore, binding forces of the binder yarns 15 are comparatively smaller in a region from the location from which the first formation 17a and the second formation 17b intersect with each other, to locations where the closest weft yarns 14a are bound by the binder yarns 15 in the stacking direction Z than in regions where other weft yarns 14 in the main body 16 apart from the closest weft yarns 14a are bound by the binder yarns 15. The farther the distance from the branching boundary line F1 to the closest weft yarn 14a in the circumferential direction X is, the weaker the binding force of the binder yarn 15 in the main body 16 is. If the distance from the branching boundary line F1 to each of the closest weft yarns 14a in the circumferential direction X is not uniform, the binding forces of the binder yarns 15 vary. However, in this embodiment, the distance from the branching boundary line F1 to each of the closest weft yarns 14a in the circumferential direction X is uniform, which thereby allows the binding force among the binder yarns 15 in the region near the boundary between the branch portion 17 and the main body 16 to be uniform.

A method of producing the fiber structure body 12 will now be described.

To produce the fiber structure body 12, a preform body 30 is woven by a spiral-weaving loom and then the woven preform body 30 is cut into desired shapes. Sizes of the preform body 30 are greater than sizes of the fiber structure body 12 in the circumferential direction X and the radial direction Y.

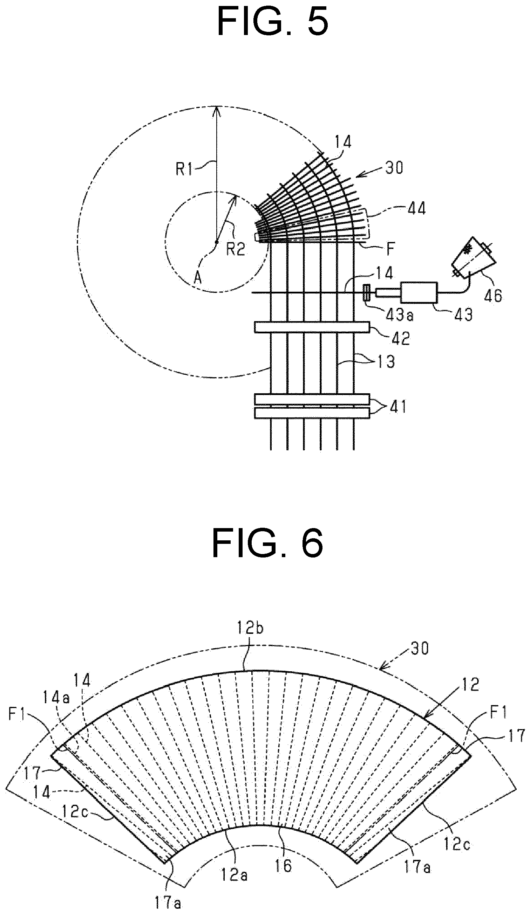

Referring to FIG. 5, the spiral-weaving loom for weaving the preform body 30 of the fiber structure body 12 is a known spiral-weaving loom that includes a plurality of pairs of heddle frames 41 (only a single pair shown in FIG. 5), a reed 42, a weft insertion device 43, an advancing device 44, and a take-up device (not shown). Each of the pairs of heddle frames 41 includes heddles corresponding to the respective warp yarns 13. The pair of the heddle frames 41 are alternately raised and lowered by a heddle-frame drive device (not shown) so as to shed the warp yarns 13. The warp yarns 13 are drawn out of a creel (not shown) or a beam (not shown) with a predetermined tension applied.

The reed 42 is disposed between the pair of the heddle frames 41 and the advancing device 44. The reed 42 moves back and forth between a rearward position and a forward position along the warp yarns 13 each of which passes through between any two of reed dents adjacent to each other. The rearward position is a position more rearward than the weft insertion device 43. The forward position is a position at which the weft yarns 14 inserted by the weft insertion device 43 are beaten to a cloth fell F. The cloth fell F is disposed orthogonal to the warp yarns 13, either along a radius from a center A of the spiral or at a location proximate to the radius.

The weft insertion device 43 inserts each of the weft yarns 14 supplied from a weft supply bobbin 46 into a shed of the warp yarns 13 at a position between the reed 42 that has moved to the rearward position and the cloth fell F. A rapier device is used as the weft insertion device 43, and a cutter 43a is disposed in front of the rapier device. The cutter 43a cuts a rear end of the inserted weft yarn 14 for every insertion.

The advancing device 44 is disposed in immediate front of the cloth fell F. The advancing device 44 includes a pair of frame-shaped holding members (not shown) and a pair of drive members disposed to be accommodated in the holding members. The advancing device 44 curves the warp yarns 13 coming from the cloth fell F at respective predetermined curvatures so as to radially arrange the weft yarns 14, resulting in forming a spirally woven fabric having an outer diameter R1 and an inner diameter R2. The advancing device 44 sends the spirally woven fabric forward. The outer diameter R1 corresponds to a radius of the outer periphery 12b of the fiber structure body 12, and the inner diameter R2 corresponds to a radius of the inner periphery 12a of the fiber structure body 12.

A take-up device is disposed below the advancing device 44. The take-up device is a horizontally-placed disk that intermittently makes horizontal rotations around the center A of the spiral. The rotational motion of the take-up device synchronizes with forwarding motions of the drive members of the advancing device 44, and a rotational direction and a rotational travel distance of the take-up device correspond to forwarding directions and forward travel distances of the drive members, respectively.

In producing the preform body 30 of the fiber structure body 12 by using the spiral-weaving loom, one of the branch portions 17 is formed first. A jig is used for this process. The first formation 17a and the second formation 17b are woven by placing the jig between them. With the jig provided in place, the warp yarns 13 are arranged on both sides of the jig in the thickness direction. When the warp yarns 13 coming from the cloth fell F are curved at the respective predetermined curvatures by the advancing device 44, the weft yarns 14 inserted from the weft supply bobbin 46 are radially arranged such that intervals between any two weft yarns 14 adjacent to each other become wider toward an outer side of the fiber structure body 12. The binder yarns 15 are also woven into the branch portion 17 by the loom, although the binder yarns 15 are not shown. In this way, the first formation 17a and the second formation 17b are woven by placing the jig between them.

After the branch portion 17 is formed, the jig is removed, and the main body 16 is woven by the spiral-weaving loom. Then, the other branch portion 17 is woven by the spiral-weaving loom, again by using the jig. Referring to FIG. 6, the preform body 30 is cut such that each of the closest weft yarns 14a of the main body 16, which is closest to the branching boundary line F1 of the corresponding branch portion 17 of the preform body 30 in the circumferential direction X, becomes parallel to the edges 12c of the branch portion 17. Then, the first formations 17a and the second formations 17b, in each of which the distances from the branching boundary line F1 to the edges 12c of the first formation 17a and of the second formation 17b in the circumferential direction X are uniform, are formed, and thus the branch portions 17 are formed. The main body 16 is also formed between the branch portions 17, and thus the fiber structure body 12 is formed.

As to the fiber structure body 12 configured as described above, the plurality of fiber structure bodies 12 is connected to each other by interposing connection members 39 between any two of the branch portions 17 adjacent to each other in the circumferential direction, so as to be formed into an annular ring, as shown in FIG. 1. By impregnating the resin as the matrix 11 into the plurality of fiber structure bodies 12 formed into the annular ring, the annular-ring-shaped fiber-reinforced composite material 10 is formed, with the plurality of the fiber structure bodies 12 used as the reinforced base materials and the resin used as the matrix 11. The thus formed annular-ring-shaped fiber-reinforced composite material 10 is used as an annular-ring-shaped component.

The above described embodiment has the following advantages.
(1) In the fiber structure body 12, each of the closest weft yarns 14a of the main body 16 is formed to be parallel to the branching boundary line F1 located at a root of the corresponding branch portion 17. This enables the distance from the branching boundary line F1 to each of the closest weft yarns 14a to be uniform along the radial direction Y, variations in the binding forces of the binder yarns 15 to be eliminated in a region from the branching boundary line F1 toward the center of the main body 16, and thereby layer separation near the branch portion 17 to be restrained. This also allows, in the fiber-reinforced composite material 10 using the fiber structure body 12 as the reinforced base material, variations in the strength to be eliminated in the region near the boundary between the main body 16 and each of the branch portions 17.
(2) The fiber structure body 12 is produced by weaving the preform body 30 and cutting the woven preform body 30. The preform body 30 is woven to be greater in size than the fiber structure body 12 in the circumferential direction X and the radial direction Y, and is cut such that the closest weft yarns 14a and the corresponding edges 12c become parallel to the associated branching boundary lines F1 in the preform body 30. In this way, only by weaving the preform body 30 greater in size than the fiber structure body 12 and cutting the preform body 30, the fiber structure body 12, including the closest weft yarns 14a parallel to the associated branching boundary lines F1, is easily produced.

The following modifications may be made to the embodiment described above.

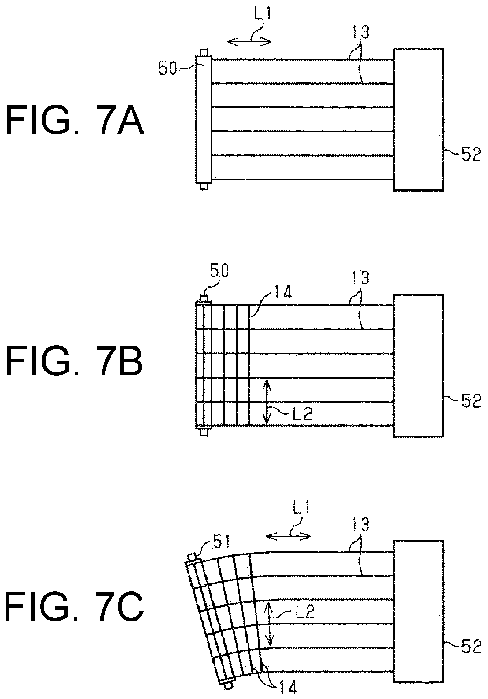

The method of producing the fiber structure body 12 is not limited to the embodiment described above, but may be modified. For example, referring to FIG. 7A, first ends of the plurality of warp yarns 13 in the yarn main-axis direction L1 are fixed to a first take-up member 50. Then, referring to FIG. 7B, the weft yarns 14 are inserted while the warp yarns 13 are drawn (taken up) from a warp supply bobbin 52 by the first take-up member 50. The warp yarns 13 are taken up by the first take-up member 50 such that the warp yarns 13 extend linearly in the yarn main-axis direction L1, and the weft yarns 14 are inserted such that the yarn main-axis direction L2 of the weft yarns 14 becomes orthogonal to the yarn main-axis direction L1 of the warp yarns 13.

While the first weft layer 31, the first warp layer 21, and the second weft layer 32 are formed and bound by the binder yarns 15 to form the first formation 17a, the third weft layer 33, the second warp layer 22, and the fourth weft layer 34 are formed and bound by the binder yarns 15 to form the second formation 17b. The first formation 17a and the second formation 17b are formed at one end of the main body 16. In this state, the weft yarns 14 are parallel to the edges 12c of the first formation 17a and the second formation 17b and to the branching boundary line F1 between the first formation 17a and the second formation 17b.

Then, referring to FIG. 7C, leading ends of the first formation 17a and the second formation 17b at the one end of the main body 16 are fixed to a second take-up member 51. While the second take-up member 51 takes up the warp yarns 13 such that main axes of the warp yarns 13 are curved in the plan view, the weft yarns 14 are inserted between the warp yarns 13, to form the main body 16. After the main body 16 is formed, the leading ends of the first formation 17a and the second formation 17b at the one end of the main body 16 are fixed to the first take-up member 50 and the first formation 17a and the second formation 17b at the other end of the main body 16 are formed in the same manner as the first formation 17a and the second formation 17b at the one end of the main body 16 are formed.

By adjusting the direction for taking up the warp yarns 13 in this way, the fiber structure body 12 is produced by the loom such that the closest weft yarns 14a become parallel to the edges 12c of the first formation 17a and the second formation 17b of the corresponding branch portion 17 and to the associated branching boundary line F1 between the first formation 17a and the second formation 17b.

The plurality of first yarns may refer to the plurality of weft yarns 14 and the plurality of second yarns may refer to the plurality of warp yarns 13.

The fiber structure body 12 may have the branch portion 17 only at one of the both ends of the main body 16 in the circumferential direction X.

The number of the yarn layers that form the branch portions 17 and the main body 16 may be changed.

The fiber-reinforced composite material 10 may not have the annular-ring shape formed by combining the plurality of fiber structure bodies 12. For example, the fiber-reinforced composite material 10 may have a curved shape in the plan view formed by combining two fiber structure bodies 12, or may have a curved shape in the plan view formed by a single fiber structure body 12.

The curvature may differ between the inner periphery 12a and the outer periphery 12b of the fiber structure body 12.

In the above described embodiment, the closest weft yarns 14a parallel to the branching boundary line F1 are arranged in the first weft layer 31 to the fourth weft layer 34 across the entire stacking direction Z of the fiber structure body 12. However, the scope of the present invention is not limited to the embodiment described above. The closest weft yarns 14a parallel to the branching boundary line F1 may be arranged only in the first weft layer 31 and the fourth weft layer 34, or only in the second weft layer 32 and the third weft layer 33.

### Reference Signs List

- F1: branching boundary line
- X: circumferential direction
- Y: radial direction
- Z: stacking direction
- 10: fiber-reinforced composite material
- 11: matrix
- 12: fiber structure body
- 12a: inner periphery
- 12b: outer periphery
- 13: warp yarn as first yarn
- 14: weft yarn as second yarn
- 15: binder yarn
- 16: main body
- 17: branch portion
- 17a: first formation
- 17b: second formation
- 21 to 22: first warp layer to second warp layer as first yarn layers
- 31 to 34: first weft layer to fourth weft layer as second yarn layers

## Claims

1. A fiber structure body (12) being a multi-layered fabric, the multi-layered fabric including:
a plurality of first yarn layers each including a plurality of first yarns; and
a plurality of second yarn layers each including a plurality of second yarns that intersects with the first yarns, the first yarn layers and the second yarn layers being stacked on top of each other and bound by a plurality of binder yarns in a stacking direction in which the first yarn layers and the second yarn layers are stacked,
the fiber structure body comprising:
a main body (16) in which all of yarn layers of the first yarn layers and the second yarn layers of the multi-layered fabric are bound by the binder yarns;
a branch portion (17) continuous with the main body at least at one end of the main body in a yarn main-axis direction of the first yarns, the branch portion including a first formation (17a) and a second formation (17b) that are branched out from the yarn layers of the multi-layered fabric, the first formation being disposed at one end of the multi-layered fabric in the stacking direction (Z) and the second formation being disposed at the other end of the multi-layered fabric in the stacking direction;
an inner periphery (12a) curved in a plan view; and
an outer periphery (12b) curved in the plan view outside the inner periphery
wherein
the yarn main-axis direction of the first yarns extends in a circumferential direction (X) and a yarn main-axis direction of the second yarns extends in a radia direction (Y),
where the radial direction refers to a direction in which a shortest line connecting the inner periphery and the outer periphery of the fiber structure body extends and the circumferential direction refers to a direction in which the inner periphery and the outer periphery of the fiber structure body extend, and
a main axis of each of closest second yarns closest to a branching boundary line (F1) among the second yarns of the main body is parallel to the branching boundary line in the branch portion, the branching boundary line extending along a location from which the first formation and the second formation of the branch portion start branching out.

2. A fiber-reinforced composite material comprising the fiber structure body according to claim 1 as a reinforced base material that is combined into a matrix (11).

3. A method of producing a fiber structure body being a multi-layered fabric, the multi-layered fabric including:
a plurality of first yarn layers each including a plurality of first yarns; and
a plurality of second yarn layers each including a plurality of second yarns that intersects with the first yarns, the first yarn layers and the second yarn layers being stacked on top of each other and bound by a plurality of binder yarns in a stacking direction in which the first yarn layers and the second yarn layers are stacked,
the fiber structure body including:
a main body in which all of yarn layers of the first yarn layers and the second yarn layers of the multi-layered fabric are bound by the binder yarns; and
a branch portion continuous with the main body at least at one end of the main body in a yarn main-axis direction of the first yarns, the branch portion including a first formation and a second formation that are branched out from the yarn layers of the multi-layered fabric, the first formation being disposed at one end of the multi-layered fabric in the stacking direction and the second formation being disposed at the other end of the multi-layered fabric in the stacking direction,
the method of producing the fiber structure body, comprising:
producing a preform body, the preform body including an inner periphery curved in a plan view and an outer periphery curved in the plan view outside the inner periphery, wherein a main axis of the first yarns extends in a circumferential direction in which the inner periphery and the outer periphery of the preform body extend, a main axis of the second yarns extends in a radial direction in which a shortest line connecting the inner periphery and the outer periphery of the preform body extends, and the preform body includes the branch portion at least one end of the preform body in the circumferential direction; and
cutting the preform body such that a main axis of each of closest second yarns closest to a branching boundary line among the second yarns of the main body becomes parallel to the branching boundary line in the branch portion to form the branch portion and the main body, the branching boundary line extending along a location from which the first formation and the second formation of the branch portion start branching out.

4. A method of producing a fiber structure body being a multi-layered fabric, the multi-layered fabric including:
a plurality of first yarn layers each including a plurality of first yarns; and
a plurality of second yarn layers each including a plurality of second yarns that intersects with the first yarns, the first yarn layers and the second yarn layers being stacked on top of each other and bound by a plurality of binder yarns in a stacking direction in which the first yarn layers and the second yarn layers are stacked,
the fiber structure body including:
a main body in which all of yarn layers of the first yarn layers and the second yarn layers of the multi-layered fabric are bound by the binder yarns; and
a branch portion continuous with the main body at least at one end of the main body in a yarn main-axis direction of the first yarns, the branch portion including a first formation and a second formation that are branched out from the yarn layers of the multi-layered fabric, the first formation being disposed at one end of the multi-layered fabric in the stacking direction and the second formation being disposed at the other end of the multi-layered fabric in the stacking direction,
the method of producing the fiber structure body, comprising:
fixing first ends of the first yarns in the yarn main-axis direction of the first yarns to a first take-up member;
inserting the second yarns orthogonally to the first yarns while the first take-up member linearly takes up the first yarns to form the first yarn layers and the second yarn layers;
binding the first yarn layers and the second yarn layers by the binder yarns in the stacking direction to form the first formation and the second formation;
fixing the first formation and the second formation to a second take-up member after forming the first formation and the second formation; and
inserting the second yarns such that a main axis of each of closest second yarns closest to a branching boundary line among the second yarns of the main body becomes parallel to the branching boundary line in the branch portion while the second take-up member takes up the first yarns so that a main axis of the first yarns is curved in a plan view, the branching boundary line extending along a location from which the first formation and the second formation of the branch portion start branching out.

## Patentansprüche

1. Faserstrukturkörper (12), der ein mehrlagiges Gewebe ist, wobei das mehrlagige Gewebe Folgendes aufweist:
eine Vielzahl von ersten Fadenlagen, die jeweils eine Vielzahl von ersten Fäden aufweisen; und
eine Vielzahl von zweiten Fadenlagen, die jeweils eine Vielzahl von zweiten Fäden aufweisen, die sich mit den ersten Fäden kreuzt, wobei die ersten Fadenlagen und die zweiten Fadenlagen übereinandergestapelt sind und in einer Stapelrichtung, in der die ersten Fadenlagen und die zweiten Fadenlagen gestapelt sind, durch eine Vielzahl von Bindefäden gebunden sind,
wobei der Faserstrukturkörper Folgendes umfasst:
einen Hauptkörper (16), in dem sämtliche Fadenlagen der ersten Fadenlagen und der zweiten Fadenlagen des mehrlagigen Gewebes durch die Bindefäden gebunden sind;
einen Verzweigungsabschnitt (17), der mit dem Hauptkörper an mindestens einem Ende des Hauptkörpers in einer Fadenhauptachsenrichtung der ersten Fäden zusammenhängt, wobei der Verzweigungsabschnitt ein erstes Gebilde (17a) und ein zweites Gebilde (17b) aufweist, die von den Fadenlagen des mehrlagigen Gewebes verzweigen, wobei das erste Gebilde an einem Ende des mehrlagigen Gewebes in der Stapelrichtung (Z) angeordnet ist und das zweite Gebilde am anderen Ende des mehrlagigen Gewebes in der Stapelrichtung angeordnet ist;
einen inneren Randbereich (12a), der in einer Draufsicht gekrümmt ist; und
einen äußeren Randbereich (12b), der außerhalb des inneren Randbereichs in der Draufsicht gekrümmt ist,
wobei
sich die Fadenhauptachsenrichtung der ersten Fäden in einer Umfangsrichtung (X) erstreckt und sich eine Fadenhauptachsenrichtung der zweiten Fäden in einer radialen Richtung (Y) erstreckt, wobei sich die radiale Richtung auf eine Richtung bezieht, in der sich eine kürzeste Linie erstreckt, die den inneren Randbereich und den äußeren Randbereich des Faserstrukturkörpers verbindet, und sich die Umfangsrichtung auf eine Richtung bezieht, in der sich der innere Randbereich und der äußere Randbereich des Faserstrukturkörpers erstrecken, und
eine Hauptachse von jedem von nächsten zweiten Fäden, die unter den zweiten Fäden des Hauptkörpers am nächsten an einer Verzweigungsgrenzlinie (F1) liegen, parallel zur Verzweigungsgrenzlinie im Verzweigungsabschnitt ist, wobei sich die Verzweigungsgrenzlinie entlang einer Stelle erstreckt, von der das erste Gebilde und das zweite Gebilde des Verzweigungsabschnitts zu verzweigen beginnen.

2. Faserverstärkter Verbundstoff, der den Faserstrukturkörper nach Anspruch 1 als ein verstärktes Grundmaterial umfasst, das zu einer Matrix (11) kombiniert ist.

3. Verfahren zur Herstellung eines Faserstrukturkörpers, der ein mehrlagiges Gewebe ist, wobei das mehrlagige Gewebe Folgendes aufweist:
eine Vielzahl von ersten Fadenlagen, die jeweils eine Vielzahl von ersten Fäden aufweisen; und
eine Vielzahl von zweiten Fadenlagen, die jeweils eine Vielzahl von zweiten Fäden aufweisen, die sich mit den ersten Fäden kreuzt, wobei die ersten Fadenlagen und die zweiten Fadenlagen übereinandergestapelt sind und in einer Stapelrichtung, in der die ersten Fadenlagen und die zweiten Fadenlagen gestapelt sind, durch eine Vielzahl von Bindefäden gebunden sind,
wobei der Faserstrukturkörper Folgendes aufweist:
einen Hauptkörper, in dem sämtliche Fadenlagen der ersten Fadenlagen und der zweiten Fadenlagen des mehrlagigen Gewebes durch die Bindefäden gebunden sind; und
einen Verzweigungsabschnitt, der mit dem Hauptkörper an mindestens einem Ende des Hauptkörpers in einer Fadenhauptachsenrichtung der ersten Fäden zusammenhängt, wobei der Verzweigungsabschnitt ein erstes Gebilde und ein zweites Gebilde aufweist, die von den Fadenlagen des mehrlagigen Gewebes verzweigen, wobei das erste Gebilde an einem Ende des mehrlagigen Gewebes in der Stapelrichtung angeordnet ist und das zweite Gebilde am anderen Ende des mehrlagigen Gewebes in der Stapelrichtung angeordnet ist,
wobei das Verfahren zur Herstellung des Faserstrukturkörpers Folgendes umfasst:
Herstellen eines Vorformkörpers, wobei der Vorformkörper einen inneren Randbereich, der in einer Draufsicht gekrümmt ist, und einen äußeren Randbereich aufweist, der außerhalb des inneren Randbereichs in der Draufsicht gekrümmt ist, wobei sich eine Hauptachse der ersten Fäden in einer Umfangsrichtung erstreckt, in der sich der innere Randbereich und der äußere Randbereich des Vorformkörpers erstrecken, sich eine Hauptachse der zweiten Fäden in einer radialen Richtung erstreckt, in der sich eine kürzeste Linie erstreckt, die den inneren Randbereich und den äußeren Randbereich des Vorformkörpers verbindet, und der Vorformkörper den Verzweigungsabschnitt an mindestens einem Ende des Vorformkörpers in der Umfangsrichtung aufweist; und
derartiges Schneiden des Vorformkörpers, dass eine Hauptachse von jedem von nächsten zweiten Fäden, die unter den zweiten Fäden des Hauptkörpers am nächsten an einer Verzweigungsgrenzlinie liegen, parallel zur Verzweigungsgrenzlinie im Verzweigungsabschnitt wird, um den Verzweigungsabschnitt und den Hauptkörper auszubilden, wobei sich die Verzweigungsgrenzlinie entlang einer Stelle erstreckt, von der das erste Gebilde und das zweite Gebilde des Verzweigungsabschnitts zu verzweigen beginnen.

4. Verfahren zur Herstellung eines Faserstrukturkörpers, der ein mehrlagiges Gewebe ist, wobei das mehrlagige Gewebe Folgendes aufweist:
eine Vielzahl von ersten Fadenlagen, die jeweils eine Vielzahl von ersten Fäden aufweisen; und
eine Vielzahl von zweiten Fadenlagen, die jeweils eine Vielzahl von zweiten Fäden aufweisen, die sich mit den ersten Fäden kreuzt, wobei die ersten Fadenlagen und die zweiten Fadenlagen übereinandergestapelt sind und in einer Stapelrichtung, in der die ersten Fadenlagen und die zweiten Fadenlagen gestapelt sind, durch eine Vielzahl von Bindefäden gebunden sind,
wobei der Faserstrukturkörper Folgendes aufweist:
einen Hauptkörper, in dem sämtliche Fadenlagen der ersten Fadenlagen und der zweiten Fadenlagen des mehrlagigen Gewebes durch die Bindefäden gebunden sind; und
einen Verzweigungsabschnitt, der mit dem Hauptkörper an mindestens einem Ende des Hauptkörpers in einer Fadenhauptachsenrichtung der ersten Fäden zusammenhängt, wobei der Verzweigungsabschnitt ein erstes Gebilde und ein zweites Gebilde aufweist, die von den Fadenlagen des mehrlagigen Gewebes verzweigen, wobei das erste Gebilde an einem Ende des mehrlagigen Gewebes in der Stapelrichtung angeordnet ist und das zweite Gebilde am anderen Ende des mehrlagigen Gewebes in der Stapelrichtung angeordnet ist,
wobei das Verfahren zur Herstellung des Faserstrukturkörpers Folgendes umfasst:
Befestigen erster Enden der ersten Fäden in der Fadenhauptachsenrichtung der ersten Fäden an einem ersten Aufnahmeelement;
Einfügen der zweiten Fäden orthogonal zu den ersten Fäden, während das erste aufnehmende Element die ersten Fäden linear aufnimmt, um die ersten Fadenlagen und die zweiten Fadenlagen auszubilden;
Binden der ersten Fadenlagen und der zweiten Fadenlagen durch die Bindefäden in der Stapelrichtung, um das erste Gebilde und das zweite Gebilde auszubilden;
Befestigen des ersten Gebildes und des zweiten Gebildes an einem zweiten Aufnahmeelement, nachdem das erste Gebilde und das zweite Gebilde ausgebildet wurden; und
derartiges Einfügen der zweiten Fäden, dass eine Hauptachse von jedem von nächsten zweiten Fäden, die unter den zweiten Fäden des Hauptkörpers am nächsten an einer Verzweigungsgrenzlinie liegen, parallel zur Verzweigungsgrenzlinie im Verzweigungsabschnitt wird, während das zweite Aufnahmeelement die ersten Fäden so aufnimmt, dass die Hauptachse der ersten Fäden in einer Draufsicht gekrümmt ist, wobei sich die Verzweigungsgrenzlinie entlang einer Stelle erstreckt, von der das erste Gebilde und das zweite Gebilde des Verzweigungsabschnitts zu verzweigen beginnen.

## Revendications

1. Corps de structure fibreuse (12) qui est un tissu multicouche, le tissu multicouche comprenant :
une pluralité de premières couches de fils comprenant chacune une pluralité de premiers fils ; et
une pluralité de secondes couches de fils comprenant chacune une pluralité de seconds fils qui coupe les premiers fils, les premières couches de fils et les secondes couches de fils étant empilées les unes sur les autres et reliées par une pluralité de fils de liaison dans une direction d'empilement dans laquelle les premières couches de fils et les secondes couches de fils sont empilées,
le corps de structure fibreuse comprenant :
un corps principal (16) dans lequel toutes les couches de fils des premières couches de fils et des secondes couches de fils du tissu multicouche sont reliées par les fils de liaison ;
une partie de branche (17) continue avec le corps principal au moins au niveau d'une extrémité du corps principal dans une direction d'axe principal de fil des premiers fils, la partie de branche comprenant une première formation (17a) et une seconde formation (17b) qui sont ramifiées à partir des couches de fils du tissu multicouche, la première formation étant disposée au niveau d'une extrémité du tissu multicouche dans la direction d'empilement (Z) et la seconde formation étant disposée au niveau de l'autre extrémité du tissu multicouche dans la direction d'empilement ;
une périphérie interne (12a) incurvée sur une vue en plan ; et
une périphérie externe (12b) incurvée sur la vue en plan à l'extérieur de la périphérie interne, dans lequel :
la direction d'axe principal de fil des premiers fils s'étend dans une direction circonférentielle (X) et une direction d'axe principal de fil des seconds fils s'étend dans une direction radiale (Y), dans laquelle la direction radiale fait référence à une direction dans laquelle la ligne la plus courte raccordant la périphérie interne et la périphérie externe du corps de structure fibreuse s'étend et la direction circonférentielle fait référence à une direction dans laquelle la périphérie interne et la périphérie externe du corps de structure fibreuse s'étendent, et
un axe principal de chacun des seconds fils les plus proches d'une ligne de limite de ramification (F1) parmi les seconds fils du corps principal est parallèle à la ligne de limite de ramification dans la partie de branche, la ligne de limite de ramification s'étendant le long d'un emplacement à partir duquel la première formation et la seconde formation de la partie de branche commencent à se ramifier.

2. Matériau composite renforcé en fibres comprenant le corps de structure fibreuse selon la revendication 1 en tant que matériau de base renforcé qui est combiné dans une matrice (11).

3. Procédé pour produire un corps de structure fibreuse qui est un tissu multicouche, le tissu multicouche comprenant :
une pluralité de premières couches de fils comprenant chacune une pluralité de premiers fils ; et
une pluralité de secondes couches de fils comprenant chacune une pluralité de seconds fils qui coupe les premiers fils, les premières couches de fils et les secondes couches de fils étant empilées les unes sur les autres et reliées par une pluralité de fils de liaison dans une direction d'empilement dans laquelle les premières couches de fils et les secondes couches de fils sont empilées,
le corps de structure fibreuse comprenant :
un corps principal dans lequel toutes les couches de fils des premières couches de fils et des secondes couches de fils du tissu multicouche sont reliées par les fils de liaison ; et
une partie de branche continue avec le corps principal au moins au niveau d'une extrémité du corps principal dans une direction d'axe principal de fil des premiers fils, la partie de branche comprenant une première formation et une seconde formation qui sont ramifiées à partir des couches de fils du tissu multicouche, la première formation étant disposée au niveau d'une extrémité du tissu multicouche dans la direction d'empilement et la seconde formation étant disposée au niveau de l'autre extrémité du tissu multicouche dans la direction d'empilement ;
le procédé pour produire le corps de structure fibreuse comprenant les étapes suivantes :
produire un corps de préforme, le corps de préforme comprenant une périphérie interne incurvée sur une vue en plan et une périphérie externe incurvée sur la vue en plan à l'extérieur de la périphérie interne, dans lequel un axe principal des premiers fils s'étend dans une direction circonférentielle dans laquelle la périphérie interne et la périphérie externe du corps de préforme s'étendent, un axe principal des seconds fils s'étend dans une direction radiale dans laquelle la ligne la plus courte raccordant la périphérie interne et la périphérie externe du corps de préforme s'étend, et le corps de préforme comprenant la partie de branche au niveau d'au moins une extrémité du corps de préforme dans la direction circonférentielle ; et
couper le corps de préforme de sorte qu'un axe principal de chacun des seconds fils les plus proches, les plus proches d'une ligne de limite de ramification parmi les seconds fils du corps principal, devient parallèle à la ligne de limite de ramification dans la partie de branche afin de former la partie de branche et le corps principal, la ligne de limite de ramification s'étendant le long d'un emplacement à partir duquel la première formation et la seconde formation de la partie de branche commencent à se ramifier.

4. Procédé pour produire un corps de structure fibreuse qui est un tissu multicouche, le tissu multicouche comprenant :
une pluralité de premières couches de fils comprenant chacune une pluralité de premiers fils ; et
une pluralité de secondes couches de fils comprenant chacune une pluralité de seconds fils qui coupe les premiers fils, les premières couches de fils et les secondes couches de fils étant empilées les unes sur les autres et reliées par une pluralité de fils de liaison dans une direction d'empilement dans laquelle les premières couches de fils et les secondes couches de fils sont empilées,
le corps de structure fibreuse comprenant :
un corps principal dans lequel toutes les couches de fils des premières couches de fils et des secondes couches de fils du tissu multicouche sont reliées par les fils de liaison ; et
une partie de branche continue avec le corps principal au moins au niveau d'une extrémité du corps principal dans une direction d'axe principal de fil des premiers fils, la partie de branche comprenant une première formation et une seconde formation qui sont ramifiées à partir des couches de fils du tissu multicouche, la première formation étant disposée au niveau d'une extrémité du tissu multicouche dans la direction d'empilement et la seconde formation étant disposée au niveau de l'autre extrémité du tissu multicouche dans la direction d'empilement,
le procédé pour produire le corps de structure fibreuse comprenant les étapes suivantes :
fixer les premières extrémités des premiers fils dans la direction d'axe principal de fil des premiers fils sur un premier élément de prise ;
insérer les seconds fils de manière orthogonale aux premiers fils alors que le premier élément de prise prend, de manière linéaire, les premiers fils pour former les premières couches de fils et les secondes couches de fils ;
relier les premières couches de fils et les secondes couches de fil par les fils de liaison dans la direction d'empilement afin de former la première formation et la seconde formation ;
fixer la première formation et la seconde formation à un second élément de prise après avoir formé la première formation et la seconde formation ; et
insérer les seconds fils de sorte qu'un axe principal de chacun des seconds fils les plus proches, les plus proches d'une ligne de limite de ramification parmi les seconds fils du corps principal devient parallèle à la ligne de limite de ramification dans la partie de branche alors que le second élément de prise prend les premiers fils de sorte qu'un axe principal des premiers fils est incurvé sur une vue en plan, la ligne de limite de ramification s'étendant le long d'un emplacement à partir duquel la première formation et la seconde formation de la partie de branche commencent à se ramifier.
